# EUROPEAN PATENT APPLICATION

(11) **EP 4 641 142 A1**
(43) Date of publication of application: **29.10.2025**
(21) Application number: 23906107.0
(22) Date of filing: 22.12.2023
(51) Int. Cl.: G01D 11/24, G01D 11/30

(54) **FULLY-SEALED DETECTOR**

(30) Priority: 23.12.2022 CN 202211672067
(71) Applicant: Nuctech Company Limited, TongFang Building, Shuangqinglu, Haidian District Beijing 100084 (CN)
(72) Inventor: TAN, Linxia, Beijing 100084 (CN); WANG, Junxiao, Beijing 100084 (CN); YU, Hao, Beijing 100084 (CN); ZOU, Xiang, Beijing 100084 (CN)
(74) Representative: Cabinet Beau de Loménie
(86) International application number: PCT/CN2023/141096
(87) International publication number: WO 2024/131952

(57) **Abstract**

A fully-sealed detector, comprising a fully-sealing housing (1) and a detector module, wherein the fully-sealing housing (1) comprises a base (11) and a sealing framework (12). The fully-sealing housing (1) can be formed by means of the connection between the base (11) and the sealing framework (12), making the fully-sealed detector have easy installation, small deformation during use, and convenient operation.

## Description

This application claims priority to Chinese Patent Application No. 202211672067.0, filed on December 23, 2022, the entire contents of which are incorporated herein by reference in its entirety.

### TECHNICAL FIELD

The present disclosure relates to the field of detectors, and in particular, to a fully sealed detector.

### BACKGROUND

Detectors are sometimes used in humid and warm environments. Due to insufficient sealing of common detectors, the internal components of the detectors are highly sensitive to the working environment. Humid and warm environments may cause performance anomalies and index decreases of the detectors, limiting the application range for such detectors. Furthermore, the insufficient sealing also makes detectors prone to damage in unexpected situations such as immersion in water or exposure to rain.

Therefore, there is a need to design a detector with a fully sealed structure to isolate the internal components such as a detector crystal array and a circuit from contact with outside air during operation, so as to achieve effects such as moisture resistance, dust prevention, salt-fog and mold prevention, thereby improving a stability and an environmental adaptability of the detector and meeting requirements for a wider application range.

### SUMMARY

According to an aspect of the present disclosure, a fully sealed detector is provided, including a fully sealed housing and a detector module mounted inside the fully sealed housing. The fully sealed housing includes: a base, including a bottom plate and a plurality of connecting columns vertically disposed on the bottom plate; and a sealing frame, including a top frame and a side frame, the top frame includes a first crossbeam and a second crossbeam opposite to each other, and a first longitudinal beam and a second longitudinal beam opposite to each other and connecting the first crossbeam and the second crossbeam, the first crossbeam and the second crossbeam extend along a first direction, and the first longitudinal beam and the second longitudinal beam extend along a second direction substantially perpendicular to the first direction. The sealing frame further includes two or more load bearing portions, the fully sealed detector is suspended or lifted through the two or more load bearing portions, the load bearing portions are connected to at least one of the first crossbeam and the second crossbeam and connected to the first longitudinal beam and the second longitudinal beam, and when the fully sealed detector is suspended through the two or more load bearing portions, a geometric center of the two or more load bearing portions is located on a same vertical line as a center of gravity of the detector. The side frame further includes a first shielding plate connected to the first crossbeam through a plurality of U-shaped members, each of the plurality of U-shaped members has a U-shaped top end connected to the first crossbeam and two legs connected to the first shielding plate; the sealing frame is connected to the plurality of connecting columns of the base through the top frame so as to be coupled with the base. The detector further includes a load bearing column, and the load bearing column is configured such that when the sealing frame is coupled with the base, a first end of the load bearing column is connected to the load bearing portion of the sealing frame, and a second end of the load bearing column opposite to the first end is connected to the bottom plate.

According to an embodiment of the present disclosure, the top frame further includes a plurality of intermediate longitudinal beams connecting the first crossbeam and the second crossbeam and spaced apart from each other, and a plurality of windows are formed among the first crossbeam, the second cross member the first longitudinal beam, the second longitudinal beam, and the plurality of intermediate longitudinal beams; and the fully sealed housing further includes a plurality of independent cover plates, and each of the plurality of independent cover plates is configured to seal a corresponding window of the plurality of windows.

According to another embodiment of the present disclosure, the top frame further includes at least one intermediate crossbeam spanning adjacent ones of the first longitudinal beam, the plurality of intermediate longitudinal beams and the second longitudinal beam and extending substantially along the first direction, the at least one intermediate crossbeam includes the two or more load bearing portions, and each of the two or more load bearing portions is connected to at least one of the first crossbeam and the second crossbeam through a connecting beam.

According to yet another embodiment of the present disclosure, the detector module includes a detector crystal array arranged along the first shielding plate on a lower side of the first shielding plate, and a second shielding plate is provided on a lower side of the detector crystal array, so that the detector crystal array is sandwiched between the first shielding plate and the second shielding plate.

According to an embodiment of the present disclosure, the detector module further includes a circuit board unit mounted on a section of the bottom plate away from the detector crystal array and the first shielding plate through a plurality of brackets, and the circuit board unit is supported by the plurality of brackets toward the top frame, so as to be at a distance from the bottom plate.

According to another embodiment of the present disclosure, the detector module further includes a Z-shaped shielding plate disposed on a side of the circuit board unit closest to the detector crystal array, the Z-shaped shielding plate is connected to one of the plurality of brackets closest to the detector crystal array, so that two ends of the Z-shaped shielding plate respectively extend along a direction substantially perpendicular to the bottom plate, and a middle portion between the two ends of the Z-shaped shielding plate is mounted on the corresponding bracket.

According to yet another embodiment of the present disclosure, a part or all of the plurality of brackets are provided with a protective plate element, so that the Z-shaped shielding plate form a substantially L-shaped protective profile with the protective plate element, and the Z-shaped shielding plate and the protective plate element are discontinuous in spatial profiles.

According to yet another embodiment of the present disclosure, the circuit board unit includes a detector circuit board and a data acquisition circuit board, the detector circuit board and the data acquisition circuit board are mounted through the plurality of brackets, and arranged in a direction away from the detector crystal array relative to the detector crystal array.

According to an embodiment of the present disclosure, an outer side surface of the first crossbeam facing away from the second crossbeam is an arc surface, and an outer edge surface of a section of the bottom plate close to the side frame and extending substantially along the first direction is an arc surface.

According to another embodiment of the present disclosure, the fully sealed housing further includes four side plates correspondingly sealing windows formed by the top frame, four connecting columns and the bottom plate.

Through the following description of the present disclosure with reference to the accompanying drawings, other objectives and advantages of the present disclosure may be apparent and the present disclosure may be understood comprehensively.

### BRIEF DESCRIPTION OF THE DRAWINGS

FIG. 1 shows a perspective view of a fully sealed detector according to an embodiment of the present disclosure;
FIG. 2 shows a perspective view of a fully sealed housing after removing an independent cover plate and a side plate according to an embodiment of the present disclosure;
FIG. 3 shows a schematic structural diagram of a base according to an embodiment of the present disclosure;
FIG. 4 shows a schematic structural diagram of a sealing frame according to an embodiment of the present disclosure;
FIG. 5 shows a partial enlarged view of a top frame according to an embodiment of the present disclosure;
FIG. 6 shows a schematic structural diagram of a load bearing column according to an embodiment of the present disclosure;
FIG. 7 shows a cross-sectional view of a fully sealed detector close to a right side, in which internal components such as a circuit board are shown; and
FIG. 8 shows a cross-sectional view of a fully sealed housing according to an embodiment of the present disclosure, in which components such as a signal interface are shown.

Reference numerals:
1-fully sealed housing, 11-base, 111-bottom plate, 112-connecting column,
12-sealing frame, 121-first crossbeam, 122-second crossbeam, 123-first longitudinal beam, 124-second longitudinal beam, 125-load bearing portion, 126-first shielding plate, 127-U-shaped member, 128-intermediate longitudinal beam, 129-intermediate crossbeam, 130-connecting beam, 131-second shielding plate,
13-cover plate,
14-side plate, 141-power interface, 142-signal interface, 143-sealing ring,
21-detector crystal array, 22-circuit board unit, 221-detector circuit board, 222-data acquisition circuit board, 23-bracket, 231-first bracket, 232-second bracket, 233-third bracket, 24-Z-shaped shielding plate, 25-first protective plate element, 26-second protective plate element,
3- load bearing column, 31- load bearing column body, 32-first flange, 33-second flange, 34-lifting column, 35-lifting ring.

### DETAILED DESCRIPTION OF EMBODIMENTS

Technical solutions of the present disclosure will be further described in detail below through the embodiments in combination with the accompanying drawings. In the descriptions, the same or similar reference numerals represent the same or similar components. The following descriptions of the embodiments of the present disclosure with reference to the accompanying drawings are intended to explain the general inventive concept of the present disclosure, and should not be construed as limiting the present disclosure.

In addition, in the following detailed descriptions, for ease of interpretation, many specific details are set forth to provide a comprehensive understanding of the embodiments of the present disclosure. However, it is apparent that one or more embodiments may also be implemented without these specific details. In other cases, well-known structures and devices are shown in diagrams to simplify the drawings.

The present disclosure provides a fully sealed detector, which may effectively isolate internal components such as a detector crystal array, a circuit, etc. inside the detector from contact with outside air, enabling a more stable and reliable performance and an enhanced environmental adaptability of the detector, meeting requirements for a wider application range. Meanwhile, the fully sealed detector has a simple structure and advantages of easy installation, easy operation, and easy maintenance.

According to the general technical concept of the present disclosure, a fully sealed detector is provided, including a fully sealed housing and a detector module mounted inside the fully sealed housing. In this embodiment, the fully sealed housing includes: a base including a bottom plate and a plurality of connecting columns vertically disposed on the bottom plate; and a sealing frame, including a top frame and a side frame. The top frame includes a first crossbeam and a second crossbeam opposite each other, as well as a first longitudinal beam and a second longitudinal beam opposite each other and connecting the first crossbeam and the second crossbeam. The first crossbeam and the second crossbeam extend along a first direction, and the first longitudinal beam and the second longitudinal beam extend along a second direction. The first direction is substantially perpendicular to the second direction. In this embodiment, it may be considered that the top frame and the side frame share the first crossbeam. In this embodiment, the sealing frame further includes two or more load bearing portions, through which the fully sealed detector may be suspended or lifted. The load bearing portions are connected to at least one of the first crossbeam and the second crossbeam and connected to the first longitudinal beam and the second longitudinal beam. When the detector is suspended via the two or more load bearing portions, a geometric center of the two or more load bearing portions is located on a same vertical line as a center of gravity of the detector. The side frame further includes a first shielding plate, which is connected to the first crossbeam through a plurality of U-shaped members. Each of the plurality of U-shaped members has a U-shaped top end connected to the first crossbeam and two legs connected to the first shielding plate. The sealing frame is connected to the plurality of connecting columns of the base through the top frame so as to be coupled with the base. The detector further includes a load bearing column, which is configured such that, when the sealing frame is coupled with the base, a first end of the load bearing column is connected to the load bearing portion of the sealing frame, and a second end of the load bearing column opposite to the first end is connected to the bottom plate. The fully sealed detector of this embodiment has fully sealing capability and is convenient to assemble. The assembly may be completed by simply combining the base and the sealing frame, greatly facilitating assembly in special environments. Moreover, due to a structural configuration of the base and the sealing frame, a rigidity is significantly enhanced.

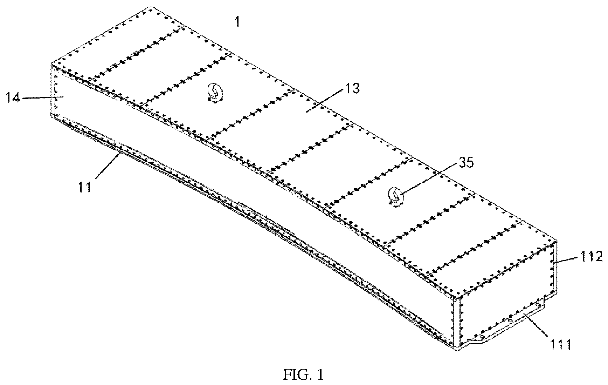

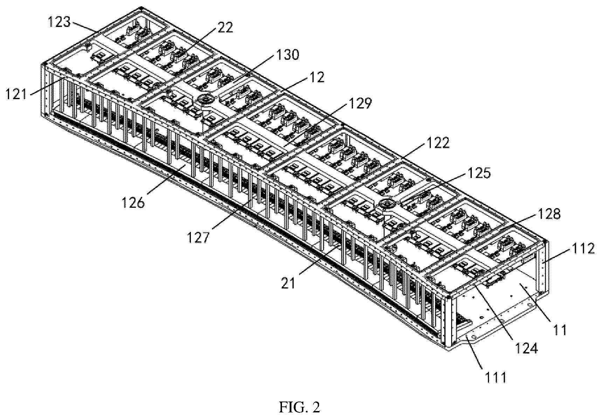

FIG. 1 shows a perspective view of the fully sealed detector according to an embodiment of the present disclosure. FIG. 2 shows a perspective view of the fully sealed housing after removing an independent cover plate and a side plate according to an embodiment of the present disclosure.

As shown in FIG. 1 and FIG. 2, in an embodiment, a fully sealed detector is provided, including: a fully sealed housing 1 and a detector module mounted inside the fully sealed housing 1. In this embodiment, the fully sealed housing 1 includes a base 11 and a sealing frame 12. The base 11 includes a bottom plate 111 and a plurality of connecting columns 112 vertically disposed on the bottom plate 111. The sealing frame 12 includes a top frame and a side frame. In this embodiment, the top frame includes a first crossbeam 121 and a second crossbeam 122 opposite each other, as well as a first longitudinal beam 123 and a second longitudinal beam 124 opposite each other and connecting the first crossbeam 121 and the second crossbeam 122. The first crossbeam 121 and the second crossbeam 122 extend along a first direction, and the first longitudinal beam 123 and the second longitudinal beam 124 extend along a second direction. The first direction is substantially perpendicular to the second direction. The first crossbeam 121 is shared between the top frame and the side frame. In this embodiment, the top frame and the side frame are used to describe parts of the fully sealed housing 1, and other expressions may be used for description. The shared first crossbeam 121 constitutes a part of the top frame, while the first crossbeam 121 may also be regarded as a part of the side frame when describing a side surface of the fully sealed housing 1.

In this embodiment, the sealing frame 12 further includes two or more load bearing portions 125 through which the fully sealed detector may be suspended or lifted. Two load bearing portions 125 are shown in FIG. 1 and FIG. 2. However, in other embodiments of the present disclosure, three or more load bearing portions 125 are provided. The load bearing portions 125 are connected to at least one of the first crossbeam 121 and the second crossbeam 122 and connected to the first longitudinal beam 123 and the second longitudinal beam 124. When the detector is suspended via two or more load bearing portions, a geometric center of the two or more load bearing portions 125 is located on a same vertical line as a center of gravity of the detector. For example, in the embodiment shown in FIG. 1, when the two load bearing portions 125 are lifted by hooks, a midpoint of the two load bearing portions 125 is located on the same vertical line as the center of gravity of the detector. In another embodiment, depending on an internal mass distribution of the detector, a virtual line connecting the two load bearing portions 125 may be positioned closer to the first crossbeam 121 relative to the second crossbeam 122. That is, the two load bearing portions 125 may be closer to the first crossbeam 121 relative to the second crossbeam 122, and a center of the virtual line connecting the two load bearing portions 125 is located on the same vertical line as the center of gravity of the detector. The fully sealed detector in this embodiment not only offers convenient assembly, but also has a small deformation during lifting due to the rigidity of a frame structure and an arrangement of load bearing portions, which reduces the risk of internal component failures caused by displacement.

The load bearing portions 125 may be arranged as shown in FIG. 2. For example, the load bearing portion 125 close to the first longitudinal beam 123 is at a first distance from the first longitudinal beam 123, and the load bearing portion 125 close to the second longitudinal beam 124 is at a second distance from the second longitudinal beam 124. A sum of the first distance and the second distance is substantially equal to half a length of the second crossbeam 122. In this embodiment, the arrangement of the load bearing portions 125 minimize deformation of the fully sealed housing 1 and facilitates lifting.

In another embodiment, three load bearing portions 125 may be provided. For example, two load bearing portions 125 are close to the first crossbeam 121, while the remaining load bearing portion 125 is close to the second crossbeam 122. Virtual lines connecting the three load bearing portions 125 form an isosceles triangle, which is located within the top frame. A sum of the distances from the two load bearing portions as a bottom side of the triangle to the first longitudinal beam 123 and the second longitudinal beam 124, respectively, is approximately equal to half the length of the second crossbeam 122.

In another embodiment, four load bearing portions 125 may be provided to form a rectangle. Depending on an internal mass distribution of the detector, a geometric center of the rectangle may be closer to the first crossbeam 121 relative to the second crossbeam 122. The geometric center of the rectangle is located on a vertical line passing through the center of gravity of the detector.

In other embodiments of the present disclosure, it is possible to provide other numbers of load bearing portions 125. A geometric center of a polygon enclosed by the load bearing portions 125 is located on a vertical line passing through the center of gravity of the detector.

The side frame further includes a first shielding plate 126, which is connected to the first crossbeam 121 through a plurality of U-shaped members 127. Each of the plurality of U-shaped members 127 has a U-shaped top end connected to the first crossbeam 121 and two legs connected to the first shielding plate 126. The sealing frame 12 is connected to the plurality of connecting columns 112 of the base 11 through the top frame so as to be coupled with the base 11. In this embodiment, the two legs of the U-shaped member 127 and the U-shaped top portion between the legs are parts of the U-shaped member 127, and those skilled in the art should understand that the literal meaning of such expressions may define the above-mentioned structures as parts the U-shaped member 127. The U-shaped members further enhance the rigidity of the frame structure, and also allow for convenient replacement and easy mounting.

In an embodiment, the detector further includes a load bearing column 3. The load bearing column 3 is configured such that, when the sealing frame 12 is coupled with the base 11, a first end of the load bearing column 3 is connected to the load bearing portion 125 of the sealing frame 12 and a second end of the load bearing column 3 opposite to the first end is connected to the bottom plate 111. The load bearing column 3 connects the base 11 and the sealing frame 12, thereby preventing a relative movement between the base 11 and the sealing frame 12 in an extension direction of the load bearing column 3. This further reduces deformation of the detector when the detector is lifted.

In the embodiments shown in FIG. 1 and FIG, 2, the fully sealed housing 1 has a hexahedral structure and is symmetric in the first direction. However, in other embodiments, the fully sealed housing 1 may have other shapes. For example, the side frame may have a curved surface; or the first longitudinal beam 123 may not be parallel to the second longitudinal beam 122. The sealing frame 12 and the base 11 of the fully sealed housing 1 are independent components. During assembly, corresponding parts of the sealing frame 12 are connected to the plurality of connecting columns 112 of the base 11, for example, using fasteners or snap-fit elements, and are secured to the connecting columns 112, so that the sealing frame 12 and the base 11 are coupled into an overall frame of the fully sealed housing 1, thereby further enhancing the rigidity. In this embodiment, the fully sealed housing 1 may be rapidly assembled using only two parts, i.e., the sealing frame 12 and the base 11.

Specifically, the first crossbeam 121, the first longitudinal beam 123, the second crossbeam 122, and the second longitudinal beam 124 are connected end to end to enclose the top frame of the sealing frame 12. Four connecting columns 112 are vertically fixed at four corners of the bottom plate 111. Each connecting column 112 includes an inner connecting portion and an outer connecting portion that are fixed together. The outer connecting portion extends beyond the inner connecting portion in a direction away from the bottom plate 111. A surface of a joint between adjacent beams of the first crossbeam 121, the first longitudinal beam 123, the second crossbeam 122 and the second longitudinal beam 124, which faces the bottom plate 111, is fixed to the inner connecting portion of the connecting column 112, and an outer edge of the joint is fixed to a part of the outer connecting portion that extends beyond the inner connecting portion. The four connecting columns 112 have exactly the same structure, which further reduces production costs and ensures a uniform external shape. In the embodiment shown in FIG. 2, the sealing frame 12 includes two load bearing portions 125 and two load bearing columns 3. When the detector is suspended or lifted vertically through two lifting rings that are respectively connected to first ends of the two load bearing column s 3, a geometric center of the two load bearing portions 125 is located on a same vertical line as the center of gravity of the detector, so that when the detector is smoothly lifted, various parts are subject to uniform force and have little deformation, thereby preventing an overall sealing of the detector from being damaged due to excessive differences in deformation across the various parts.

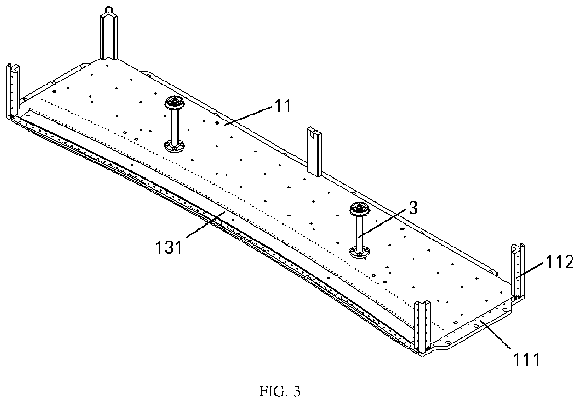

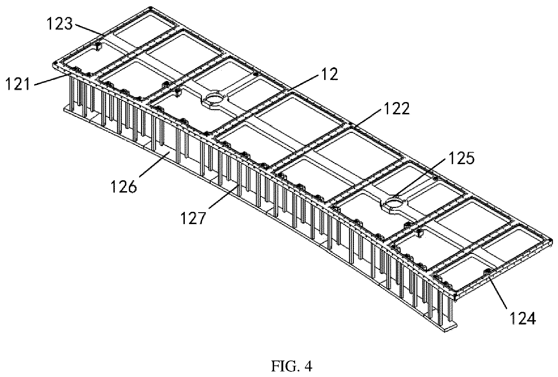

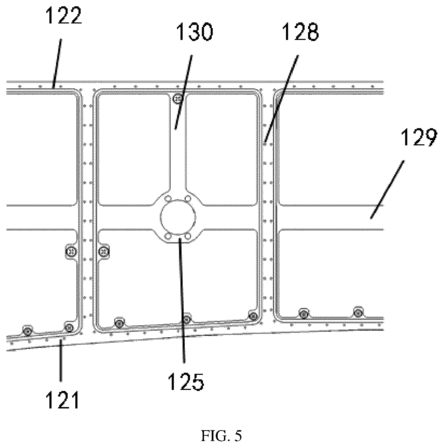

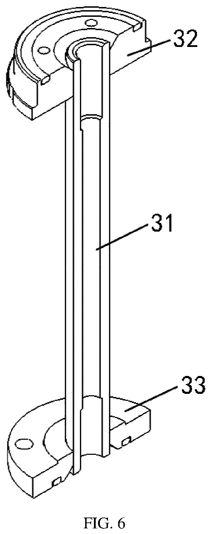

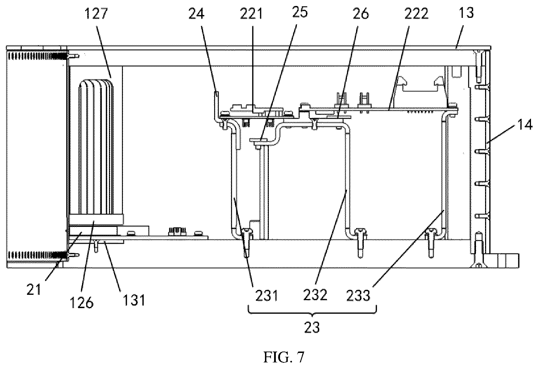

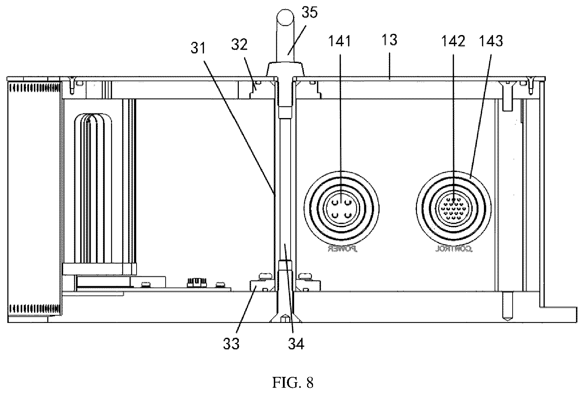

FIG. 3 shows a structural diagram of the base according to an embodiment of the present disclosure. FIG. 4 shows a schematic structural diagram of the sealing frame according to an embodiment of the present disclosure. FIG. 5 shows a partial enlarged view of the top frame according to an embodiment of the present disclosure. FIG. 6 shows a schematic structural diagram of the load bearing column according to an embodiment of the present disclosure. FIG. 7 shows a right side view of the fully sealed housing after removing the independent cover plate and the side plate as shown in FIG. 2. FIG. 8 shows a left side view of the fully sealed detector according to an embodiment of the present disclosure.

In an embodiment, on the basis of the above-mentioned structure, the top frame further includes a plurality of intermediate longitudinal beams 128 connecting the first crossbeam 121 and the second crossbeam 122 and are spaced apart from each other. For example, in the embodiment shown in FIG. 2, a total of seven intermediate longitudinal beams 128 are provided. However, it is possible to provide other numbers of intermediate longitudinal beams 128.

A plurality of windows are defined among the first crossbeam 121, the second crossbeam 122, the first longitudinal beam 123, the second longitudinal beam 124, and the plurality of intermediate longitudinal beams 128. The fully sealed housing 1 further includes a plurality of independent cover plates 13, which are used to seal the windows. As shown in FIG. 1, FIG. 2 and FIG. 5, the top frame includes seven intermediate longitudinal beams 128 and eight independent cover plates 13. The eight independent cover plates 13 are in one-to-one correspondence with eight windows. Shapes of the eight independent cover plates 13 are consistent with shapes of the eight windows, and sizes of the eight independent cover plates 13 are larger than sizes of the eight windows, so that the eight independent cover plates 13 may respectively seal the corresponding windows when connected to the top frame. More specifically, the eight independent cover plates 13 are sequentially arranged on the top frame, threaded holes are evenly distributed around each cover plates 13, and screw holes are evenly distributed at corresponding positions on the top frame, so that fasteners such as screws may be used to tightly connect the cover plates 13 and the top frame, ensuring even distribution of forces between the cover plates 13 and the top frame, thereby maintaining long-term and stable sealing effect. As shown in FIG. 1, adjacent cover plates 13 fixed to the top frame are in contact with each other without gaps. A combined cover plate formed by the eight independent cover plates 13 completely covers the top frame, and an outer contour of the combined cover plate overlaps with an outer contour of the top frame. In this embodiment, since a plurality of windows are provided, it is possible to independently remove any one of the cover plates 13 to access to an interior of the fully sealed housing 1 of the detector through the corresponding window, for example, for replacement of the components or maintenance of the circuit. Further, the fully sealed housing 1 further includes four side plates 14 correspondingly seal windows formed by sides of the top frame, the four connecting columns 112 and sides of the bottom plate 111. The side windows may be sealed, or allowed to be opened individually to allow access to the interior of the sealed housing 1 from a side portion.

In each of the above-mentioned connecting columns 112, the inner connecting portion is L-shaped and includes a first sealing plate and a second sealing plate perpendicular to each other. The first sealing plate and the second sealing plate respectively provide a corresponding first sealing surface and a corresponding second sealing surface. Each side surface of the bottom plate 111 provides a third sealing surface. An outer side surface of each of the first crossbeam 121, the second crossbeam 122, the first longitudinal beam 123 and the second longitudinal beam 124 of the top frame, which faces an exterior of the fully sealed housing 1, provides a fourth sealing surface. Threaded holes are evenly distributed around the first sealing surface, the second sealing surface, the third sealing surface, the fourth sealing surface and each of the four side plates 14. An inner side surface of each of the four side plates 14, which faces the interior of the fully sealed housing 1, is attached to the first sealing surface, the second sealing surface, the third sealing surface and the fourth sealing surface, and is fixed to the first sealing surface, the second sealing surface, the third sealing surface and the fourth sealing surface using fasteners such as screws. In order to improve the sealing performance of the fully sealed housing 1, sealing rings are provided between each cover plate 13 and the top frame, between the side plate 14 and the bottom plate 111, between the side plate 14 and the first sealing plate, between the side plate 14 and the second sealing plate, and between the side plate 14 and a corresponding one of the first crossbeam 121, the second crossbeam 122, the first longitudinal beam 123 and the second longitudinal beam 124, while a sealant is additionally used for sealing.

In the above-mentioned embodiments, by dividing the top of the fully sealed housing into eight windows and providing corresponding independent cover plates in one-to-one correspondence, when a detector module mounted inside the fully sealed housing needs maintenance, it is only required to remove the corresponding cover plate for maintenance. There is no need to disassemble the base 11 and the sealing frame 12, and other parts may not be affected. Further, the sealing rings and the evenly distributed threaded holes and fasteners between the cover plates and the top frame being used for sealing may ensure a good sealing effect of the housing even after a cover plate is removed and reassembled. Of course, the number of the independent cover plates 13 as well as the number of the windows are not limited to eight, and may be other numbers.

In addition, as shown in FIG. 2, the number of the first shielding plates 126 also corresponds one-to-one with the number of the independent cover plates 13 as well as the number of the windows, and the first shielding plates are correspondingly connected to a side of the first crossbeam 121 located inside the windows through the U-shaped members 127. Each of the first shielding plates 126 is an independent component, so that during maintenance or replacement of the detector module, it is only needed to remove a corresponding first shielding plate 126 from a corresponding window on the top frame of the fully sealed housing 1 via the U-shaped member 127, so that the maintenance is convenient. More specifically, mounting holes are provided on a side of the first crossbeam 121 located inside the windows, so that the top ends of the U-shaped members 127 may be mounted to the first crossbeam 121 through fasteners. The two legs of each U-shaped member 127 are also connected to the first shielding plate 126 through fasteners.

In an embodiment, the top frame further includes at least one intermediate crossbeam 129, which extend substantially along the first direction and span adjacent ones of the first longitudinal beam 123, the plurality of intermediate longitudinal beams 128 and the second longitudinal beam 124. The at least one intermediate crossbeam 129 includes two or more load bearing portions 125, each of which is connected to at least one of the first crossbeam 121 and the second crossbeam 122 via a connecting beam 130. In the embodiment shown in FIG. 2, a total of seven intermediate longitudinal beams 128 are provided, and the intermediate crossbeam 129 correspondingly spans two longitudinal beams 128 forming each window, thereby enhancing a load bearing capacity of the top frame. As shown in FIG. 4 and FIG. 5, each of the two load bearing portions 125 is a ring-shaped member connected to the intermediate crossbeam 129, and each of the load bearing portions 125 is connected to the second crossbeam 122 through a connecting beam 130. In other embodiments, each of the load bearing portions 125 may be respectively connected to the first crossbeam 121 and the second crossbeam 122 through two connecting beams 130.

More specifically, as shown in FIG. 2 and FIG. 7, the detector module includes a detector crystal array 21, which is arranged along the first shielding plate 126 on a lower side of the first shielding plate 126. A second shielding plate 131 is provided on a lower side of the detector crystal array 21 such that the detector crystal array 21 is sandwiched between the first shielding plate 126 and the second shielding plate 131.

According to the embodiments of the present disclosure, since the first shielding plate 126 is connected to the first crossbeam 121 through the U-shaped member 127 and the second shielding plate 131 may be arranged on the bottom plate 111, the detector crystal array 21 may be sandwiched between the first shielding plate 126 and the second shielding plate 131 when the base 11 is connected to the sealing frame 12. Further, the detector crystal array 21 may be exposed for inspection and maintenance by separating the base 11 from the sealing frame 12. In this embodiment, the detector crystal array 21 may be fixed without any bolts or fasteners passing through any part of the detector crystal array 21, thereby maximizing a utilization efficiency of a detector crystal. Moreover, an arrangement of the first shielding plate 126 and the second shielding plate 131 may achieve a collimation of rays, preventing stray rays from being detected by the detector crystal and thus affecting a detection result of the detector.

In an embodiment, the first shielding plate 126 and the second shielding plate 131 are arranged along an arc. For example, referring to FIG. 2, when a radiation source emits rays toward the side frame, the rays may spread radially from a point source and irradiate the detector. The arc arrangement of the first shielding plate 126 and the second shielding plate 131 allows the detector crystal between the first shielding plate 126 and the second shielding plate 131 to receive a radiation from the point source at an optimal incidence angle. That is, a front surface of each detector crystal faces the radiation, so that a detected signal reflects an intensity of the radiation more accurately.

In the embodiment shown in FIG. 2, corresponding to the eight windows, there may be eight first shielding plates 126. Each first shielding plate 126 is connected through fasteners to the two legs of each U-shaped member 127. Each of the two first shielding plates 126 disposed at two ends of the arc is connected to two U-shaped members 127, while each of the remaining six first shielding plates 126 is connected to three U-shaped members 127. That is, each first shielding plate 126 forms an independent shielding member with two or three U-shaped members 127, the shielding members correspond one-to-one with the windows and the independent cover plates 13, thereby facilitating maintenance of circuits or detector modules at a current position. As shown in FIG. 7, the second shielding plate 131 is disposed on the bottom plate 111, for example, in a groove formed on the bottom plate 111, or the second shielding plate 131 is fixed on the bottom plate 111 through fasteners. The detector crystal array 21 may be disposed on a circuit board on the bottom plate 111 or connected to the circuit board via wires.

The first shielding plate 126 and the second shielding plate 131 prevent the detector from experiencing circuit malfunctions or performance parameter degradation due to prolonged exposure to high-energy rays, thereby improving performance indexes and image detection quality of the detector. Specifically, both the first shielding plate 126 and the second shielding plate 131 may be made of lead or other materials.

In an embodiment, the detector crystal array 21 is also arranged along an arc, with equal spacing between adjacent detector crystal modules in the detector crystal array 21. Specifically, the detector crystal array 21 is positioned on a section of the bottom plate 111 close to an external radiation source and arranged along an arc centered on the external radiation source. The detector crystal modules in the detector crystal array 21 are uniformly distributed such that a center of each detector crystal module passes through a ray beam emitted from the external radiation source.

In the embodiment where the detector crystal array 21 is arranged along the arc, an outer side surface of the first crossbeam 121 facing away from the second crossbeam 122 is an arc surface; and an outer edge surface of a section of the bottom plate 111 close to the side frame substantially extending along the first direction is also an arc surface. In an embodiment, the arc surfaces are also centered on the external radiation source.

In an embodiment, as shown in FIG. 7, the detector module further includes a circuit board unit 22, which is mounted on a section of the bottom plate 111 away from the detector crystal array 21 and the first shielding plate 126 through a plurality of brackets 23. The circuit board unit 22 is supported by the plurality of brackets 23 toward the top frame to be at a distance from the bottom plate 111. In this embodiment, by supporting the circuit board unit 22 up by a distance using the plurality of brackets 23, the circuit board unit 22 may avoid a part of ray beams from the external radiation source, thereby protecting the circuit board unit 22.

In an embodiment, as shown in FIG. 7, the detector module further includes a Z-shaped shielding plate 24. The Z-shaped shielding plate 24 is disposed on a side of the circuit board unit 22 closest to the detector crystal array 21 and is connected to one of the plurality of brackets 23 closest to the detector crystal array 21, so that two ends of the Z-shaped shielding plate 24 respectively extend along a direction substantially perpendicular to the bottom plate 111, and a middle portion between the two ends of the Z-shaped shielding plate 24 is mounted on the corresponding bracket. The two ends of the Z-shaped shielding plate 24 that extend along the direction perpendicular to the bottom plate 111 further prevent the ray beams from the external radiation source from irradiating the circuit board unit 22, thereby improving a stability of the circuit board unit 22. In this embodiment, the two ends of the Z-shaped shielding plate 24 may be flat plate parts, and a part between the two ends is also a flat plate. The term "Z-shaped" refers to a substantially Z-shaped cross-section of the shielding plate 24.

Referring to FIG. 7, a part or all of the plurality of brackets are provided with protective plate elements. The Z-shaped shielding plate 24 and the protective plate element form a substantially L-shaped protective profile. The Z-shaped shielding plate 24 and the protective plate element are discontinuous in spatial profiles. That is, there is a gap between the Z-shaped shielding plate 24 and other shielding plate elements, in other words, they do not form an integral or continuous surface. In this way, wires may pass through the gap between the Z-shaped shielding plate 24 and other protective plate elements from the bottom plate 111.

In an embodiment, the substantially L-shaped protective profile formed by combining the protective plate element mounted on other brackets with the Z-shaped shielding plate 24 may prevent ray beams from the external radiation source in multiple directions from irradiating the circuit board unit 22, providing a wider protection range. For example, the Z-shaped shielding plate 24 may extend vertically, while the plurality of shielding plate elements may extend horizontally, together forming a substantially L-shaped protective profile.

The discontinuity between the Z-shaped shielding plate 24 and the shielding plate element in spatial profile creates the gap between them, thereby reserving space for routing wires from the detector crystal array 21 to the circuit board unit 22.

More specifically, the circuit board unit 22 includes a detector circuit board 221 and a data acquisition circuit board 222. The detector circuit board 221 and the data acquisition circuit board 222 are mounted using a plurality of brackets and the detector circuit board 221 is closer to the detector crystal array 21 relative to the data acquisition circuit board 222. As shown in FIG. 7, the plurality of brackets include a first bracket 231, a second bracket 232, and a third bracket 233, which are spaced apart from each other and arranged in sequence in a direction away from the detector crystal array 21. The Z-shaped shielding plate 24 is disposed on the first bracket 231, the detector circuit board 221 is disposed on the first bracket 231 and the second bracket 232, and the data acquisition circuit board 222 is disposed on the second bracket 232 and the third bracket 233. The shielding plate elements include a first shielding plate element 25 mounted on the second bracket 232. The first shielding plate element 25 is located below the detector circuit board 221 and extends beyond the second bracket 232 along a direction toward the first bracket 231. A bottom-to-top passage extending from the bottom plate 111 to the detector circuit board 221 is formed in a space formed by the first bracket 231, the second bracket 232, the Z-shaped shielding plate 24 and the first shielding plate element 25, allowing wires from the detector crystal array 21 to pass through the passage and reach the detector circuit board 221. The detector circuit board 221 is used to acquire real-time signals from the detector crystal array 21 and convert the real-time signals into digital signals. The data acquisition circuit board 222 is used to control a timing sequence of the detector circuit and buffer and transmit detector data. The first shielding plate element 25 located below the detector circuit board 221 is used to protect a core chip of the data acquisition circuit board 222 from being irradiated by ray beams from below, which may otherwise cause data anomalies or failures. As shown in FIG. 7, the first bracket 231 is substantially Z-shaped. One end of the first bracket 231 is connected to the bottom plate 111 through fasteners, and the other end of the first bracket 231 is connected to a middle portion between the two ends of the Z-shaped shielding plate 24 through fasteners. A middle section between two ends of the first bracket 231 is substantially perpendicular to the bottom plate 111. A length of the middle section of the first bracket 231 is greater than a length by which one end of the Z-shaped shielding plate 24 extends in a direction substantially perpendicular to the bottom plate 111, so that the Z-shaped shielding plate 24 is also supported toward the top frame away from the bottom plate 111 by a certain distance. Both the detector circuit board 221 and the data acquisition circuit board 222 are arranged parallel to the bottom plate 111.

In addition, the shielding plate elements further include a second shielding plate element 26 disposed on the second bracket 232. The second shielding plate element 26 is mounted on the bottom plate 111 and located below the data acquisition circuit board 222. The second shielding plate element 26 is used to protect the core chip of the data acquisition circuit board 222 from being irradiated by ray beams from below, which may otherwise cause data anomalies or failures. Specifically, the second bracket 232 has an "n" shape and includes a first support leg, a second support leg, and a connecting frame between the two. The first support leg and the second support leg are both substantially vertically connected to the bottom plate 111. The connecting frame is provided with a first flat portion, a second flat portion, and a third flat portion between the first flat portion and the second flat portion. The first shielding plate element 25 is mounted on the first flat portion and extends beyond the first support leg along a direction toward the first bracket 231. The second flat portion and the third flat portion are located on a side of the first flat portion facing the top frame. One end of the detector circuit board 221 and one end of the data acquisition circuit board 222 are fixed to the third flat portion through fasteners. The second shielding plate element 26 is mounted on the second flat portion and extends beyond the second support leg along a direction toward the third bracket 233. Ends of the first support leg and the second support leg of the second bracket 232 may also have bent portions, which are attached to the bottom plate 111 and secured using fasteners. The third bracket 233 is also substantially Z-shaped. One end of the third bracket 233 is connected to the bottom plate 111 through fasteners, and the other end of the third bracket 233 is connected to one end of the data acquisition circuit board 222 through fasteners. A middle section between the two ends of the third bracket 233 is substantially perpendicular to the bottom plate 111. More specifically, as shown in FIG. 7, a middle portion between the two ends of the Z-shaped shielding plate 24 is mounted on one end of the first bracket 231 through a fastener. One end of the detector circuit board 221 is mounted on the middle portion of the Z-shaped shielding plate 24 through the same fastener, and the other end of the detector circuit board 221 is mounted on the third flat portion of the second bracket 232 through a fastener. The end of the detector circuit board 221 mounted on the third flat portion is spaced apart from the end of the data acquisition circuit board 222 mounted on the third flat portion. The other end of the data acquisition circuit board 222 is mounted on one end of the third bracket 233. Both the detector circuit board 221 and the data acquisition circuit board 222 are parallel to the bottom plate 111. The first shielding plate element 25 on the first flat portion of the second bracket 232 is located below the detector circuit board 221 and is spaced apart from both the first bracket 231 and the Z-shaped shielding plate 24. The second shielding plate element 26 on the second flat portion of the second bracket 232 is located below the data acquisition circuit board 222. Thus, as shown in FIG. 7, a bottom-to-top passage extending from the bottom plate 111 to the detector circuit board 221 is formed in a space formed by the end and middle portions of the first bracket 231, the Z-shaped shielding plate 24, the first support leg of the second bracket 232, and the first shielding plate element 25, allowing the wires from the detector crystal array 21 to pass through the passage and reach the detector circuit board 221. Therefore, the above-mentioned structure may not only protect the circuit board unit 22, but also ensure that the connecting wires between the detector crystal array 21 and the detector circuit board 221 may bypass the Z-shaped shielding plate 24. Further, the first bracket 231, the second bracket 232 and the third bracket 233 are all metal brackets, and the fully sealed housing 1 including the base 11 is also made of metal, so that heat generated by the circuit board may be conducted into the metal housing 1, thereby cooling the detector in operation. In addition, the metal housing 1 is made of a metal with good electrical conductivity to form an equipotential all-metal shielding housing, thus providing an excellent interference-resistant electromagnetic shielding function. The above-mentioned mechanical structure of the fully sealed detector of the present disclosure is reliable and has a good vibration resistance, so that the fully sealed detector may be mounted vertically, horizontally, or in other ways according to an orientation of the external radiation source, and may be flexibly applied to various application scenarios.

In an embodiment, as shown in FIG. 3, FIG. 6 and FIG. 8, the load bearing column 3 includes a load bearing column body 31 as well as a first flange 32 and a second flange 33 respectively fixed at two ends of the load bearing column body 31. The load bearing column body 31 is a hollow cylinder, and two end faces of the load bearing column body 31 are flush with corresponding end faces of the first flange 32 and the second flange 33. Each end face of the first flange 32 and the second flange 33 is provided with a circumferential sealing groove and threaded holes that are evenly distributed along the circumference. The sealing groove and the threaded holes of the first flange 32 are distributed on a same end face, and the sealing groove is radially outside the threaded holes. The sealing groove and the threaded holes of the second flange 33 are distributed on two opposite end faces. The first flange 32 is embedded in an annular load bearing portion 125 of the top frame, and two end faces of the first flange 32 are flush with end faces of the load bearing portion 125. The end face of the first flange 32 provided with the sealing groove is attached to a surface of the cover plate 13 facing the bottom plate 111, and is hermetically fixed to the cover plate 13 through a collaboration of the fastener and the threaded hole and a collaboration of an O-ring and the sealing groove. The end face of the second flange 33 provided with the sealing groove is attached to a surface of the bottom plate 111 facing the top frame, and is hermetically fixed to the bottom plate 111 through a collaboration of an O-ring and the sealing groove and a collaboration of the fastener and the threaded hole. Since the two end faces of the load bearing column body 31 are respectively flush with corresponding end faces of the first flange 32 and the second flange 33, the two end faces of the load bearing column body 31 are also hermetically connected to the cover plate 13 and the bottom plate 111, that is, the load bearing column body 31 isolates an internal space of the fully sealed housing 1 from an external environment. Further, through holes with diameters not greater than an inner diameter of the load bearing column body 31 are respected provided at a position of the bottom plate 111 below the load bearing column body 31 and a position of the cover plate 13 above the load bearing column body 31, so that one end of a lifting column 34 may pass through the load bearing column body 31 via the two through holes and extend from a side of the bottom plate 111 away from the second flange 33 to a side of the cover plate 13 away from the first flange 32. An end of the lifting column 34 close to the bottom plate 111 is hermetically fixed to the through hole on the bottom plate 111 through fasteners. An end of the lifting column 34 close to the cover plate 13 is hermetically fixed to the through hole on the cover plate 13 through fasteners, and the end extends beyond the end face of the cover plate 13 for mounting of the lifting ring 35. The lifting ring 35 is used to lift the detector to an application platform of the detector. The load bearing column 3 of the above-mentioned structure is capable of supporting an entire lifting weight of the detector, so that a lifting force is directed to the base 11 which has the highest stiffness. In this way, a uniform deformation of the entire detector, and an integrity of the fully sealed structure may be ensured. Meanwhile, the collaborations of the sealing grooves and O-rings on the first flange 32 and the second flange 33 of the load bearing column 3 as well as the collaborations of the evenly distributed threaded holes and fasteners also ensure the sealing performance of the overall structure.

In the embodiment shown in FIG. 8, a power interface 141 and a signal interface 142 are provided on the side plate 14 of the fully sealed detector that extends substantially along the second direction, so as to supply power to the detector module and achieve control and data transmission. Both the power interface 141 and the signal interface 142 use waterproof aviation connectors. A sealing ring 143 is designed at a mounting position of the aviation connectors to ensure sealing between the aviation connectors and the side plate 14, and to reduce an impact of plugging/unplugging actions of the aviation connectors on the sealing performance, ensuring a long-term stability of the fully sealed structure.

In the above-mentioned exemplary embodiments of the present disclosure, the fully sealed housing of the fully sealed detector provided by the present disclosure is designed to mainly include the sealing frame and the base, and the sealing frame may be coupled with the base through connections with the plurality of connecting columns of the base, making assembly of the fully sealed housing of the fully sealed detector easy and efficient. Further, the top cover is designed as a plurality of segmented independent top covers used in combination with a corresponding number of windows, and the first shielding plates are also designed as segmented shielding plates corresponding one-to one with the windows, so that during maintenance of the detector module, it is only required to remove the corresponding top cover and disassemble and repair the corresponding first shielding plate, which makes disassembly and maintenance convenient and quick. Moreover, the top cover and the top frame are sealed through sealing rings and evenly distributed fasteners, which may ensure the excellent sealing effect of the fully sealed housing after disassembly and reassembly. Further, the fully sealed housing of the present disclosure not only strictly isolates the internal detector crystal array, circuits, etc., from contact with external air, but also incorporates thorough considerations for ray protection, electromagnetic shielding, heat dissipation, moisture resistance, dust prevention, and salt-fog and mold prevention. As a result, the detector module exhibits more stable and reliable performances with an enhanced environmental adaptability, meeting demands of a broader application range. Unexpected situations such as immersion in water or exposure to rain may also be prevented without the need for dehumidification equipment such as air conditioners used in conventional detectors, thus lowering the costs.

In the above-mentioned exemplary embodiments of the present disclosure, by mounting the detector module in the fully sealed housing, the detector crystal array, circuits, etc., of the detector module may be isolated from contact with external air, achieving effects such as moisture resistance, dust prevention, salt-fog and mold prevention, while further enhancing the performance stability and reliability and improving the environmental adaptability of the detector module, thereby meeting the needs of a broader application range. In addition, by designing the fully sealed housing to mainly include the sealing frame and the base, the sealing frame may be coupled with the base via connections with the connecting columns of the base, so that the assembly of the fully sealed housing of the fully sealed detector is easy and efficient. Through collaborations of the cover plates and the windows formed in the top frame, during maintenance of the detector module, it is only required to select the corresponding top cover for disassembly and maintenance which is convenient and quick, and a local disassembly may ensure a good sealing effect after disassembly and reassembly.

It may be understood by those skilled in the art that the embodiments described above are illustrative, and those skilled in the art may make improvements thereto. The structures described in various embodiments may be freely combined without conflicting in structure or principle.

After detailed descriptions of the embodiments of the present disclosure, those skilled in the art may clearly understand that various changes and modifications may be made without departing from the scope and spirit of the claims, and the present disclosure is not limited to the implementations of the exemplary embodiments provided in the specification.

Although the present disclosure has been described with reference to the accompanying drawings, the embodiments shown in the drawings are intended to exemplify the preferred embodiments of the present disclosure and should not be construed as limiting the present disclosure.

Although some embodiments of the general concept of the present disclosure have been shown and described, those ordinary skilled in the art will understand that changes may be made to these embodiments without departing from the principle and spirit of the general concept of the present disclosure. The scope of the present disclosure is defined by the claims and their equivalents.

It should be noted that the expression "including" does not exclude other elements or steps, and the expression "a" or "an" does not exclude multiple. In addition, any reference numerals in the claims should not be construed as limiting the scope of the present disclosure.

## Claims

1. A fully sealed detector, comprising a fully sealed housing (1) and a detector module mounted inside the fully sealed housing (1),
wherein the fully sealed housing (1) comprises:
a base (11), comprising a bottom plate (111) and a plurality of connecting columns (112) vertically disposed on the bottom plate (111); and
a sealing frame (12), comprising a top frame and a side frame, wherein the top frame comprises a first crossbeam (121) and a second crossbeam (122) opposite to each other as well as a first longitudinal beam (123) and a second longitudinal beam (124) opposite to each other, the first longitudinal beam (123) and the second longitudinal beam (124) connects the first crossbeam (121) and the second crossbeam (122), the first crossbeam (121) and the second crossbeam (122) extend along a first direction, and the first longitudinal beam (123) and the second longitudinal beam (124) extend along a second direction substantially perpendicular to the first direction,
wherein the sealing frame (12) further comprises two or more load bearing portions (125), the fully sealed detector is suspended or lifted through the two or more load bearing portions (125), the load bearing portions (125) are connected to at least one of the first crossbeam (121) and the second crossbeam (122) and connected to the first longitudinal beam (123) and the second longitudinal beam (124), and when the fully sealed detector is suspended through the two or more load bearing portions, a geometric center of the two or more load bearing portions (125) is located on a same vertical line as a center of gravity of the detector;
wherein the side frame further comprises a first shielding plate (126) connected to the first crossbeam (121) through a plurality of U-shaped members (127), each of the plurality of U-shaped members (127) has a U-shaped top end connected to the first crossbeam (121) and two legs connected to the first shielding plate (126);
wherein the sealing frame (12) is connected to the plurality of connecting columns (112) of the base (11) through the top frame so as to be coupled with the base (11); and
wherein the detector further comprises a load bearing column (3), and the load bearing column (3) is configured such that when the sealing frame (12) is coupled with the base (11), a first end of the load bearing column (3) is connected to the load bearing portion (125) of the sealing frame (12), and a second end of the load bearing column (3) opposite to the first end is connected to the bottom plate (111).

2. The fully sealed detector according to claim 1, wherein the top frame further comprises a plurality of intermediate longitudinal beams (128) connecting the first crossbeam (121) and the second crossbeam (122) and spaced apart from each other, and a plurality of windows are formed among the first crossbeam (121), the second cross member (122), the first longitudinal beam (123), the second longitudinal beam (124), and the plurality of intermediate longitudinal beams (128); and
wherein the fully sealed housing (1) further comprises a plurality of independent cover plates (13), and each of the plurality of independent cover plates (13) is configured to seal a corresponding window of the plurality of windows.

3. The fully sealed detector according to claim 2, wherein the top frame further comprises at least one intermediate crossbeam (129) spanning adjacent ones of the first longitudinal beam (123), the plurality of intermediate longitudinal beams (128) and the second longitudinal beam (124) and extending substantially along the first direction, the at least one intermediate crossbeam (129) comprises the two or more load bearing portions (125), and each of the two or more load bearing portions (125) is connected to at least one of the first crossbeam (121) and the second crossbeam (122) through a connecting beam (130).

4. The fully sealed detector according to claim 1, wherein the detector module comprises a detector crystal array (21) arranged along the first shielding plate (126) on a lower side of the first shielding plate (126), and a second shielding plate (131) is provided on a lower side of the detector crystal array (21), so that the detector crystal array (21) is sandwiched between the first shielding plate (126) and the second shielding plate (131).

5. The fully sealed detector according to claim 4, wherein the detector module further comprises a circuit board unit (22) mounted on a section of the bottom plate (111) away from the detector crystal array (21) and the first shielding plate (126) through a plurality of brackets (23), and the circuit board unit (22) is supported by the plurality of brackets (23) toward the top frame, so as to be at a distance from the bottom plate (111).

6. The fully sealed detector according to claim 5, wherein the detector module further comprises a Z-shaped shielding plate (24) disposed on a side of the circuit board unit (22) closest to the detector crystal array (21), the Z-shaped shielding plate (24) is connected to one of the plurality of brackets (23) closest to the detector crystal array (21), so that two ends of the Z-shaped shielding plate (24) respectively extend along a direction substantially perpendicular to the bottom plate (111), and a middle portion between the two ends of the Z-shaped shielding plate (24) is mounted on the corresponding bracket.

7. The fully sealed detector according to claim 6, wherein a part or all of the plurality of brackets are provided with a protective plate element, so that the Z-shaped shielding plate (24) form a substantially L-shaped protective profile with the protective plate element, and the Z-shaped shielding plate (24) and the protective plate element are discontinuous in spatial profiles.

8. The fully sealed detector according to claim 7, wherein the circuit board unit (22) comprises a detector circuit board (221) and a data acquisition circuit board (222), the detector circuit board (221) and the data acquisition circuit board (222) are mounted through the plurality of brackets, and arranged in a direction away from the detector crystal array (21) relative to the detector crystal array (21).

9. The fully sealed detector according to claim 4, wherein an outer side surface of the first crossbeam (121) facing away from the second crossbeam (122) is an arc surface, and an outer edge surface of a section of the bottom plate (111) close to the side frame and extending substantially along the first direction is an arc surface.

10. The fully sealed detector according to any one of claims 1 to 9, wherein the fully sealed housing (1) further comprises four side plates (14) correspondingly sealing windows formed by the top frame, four connecting columns (112) and the bottom plate (111).
